Europäisches Patentamt

European Patent Office

Office européen des brevets

(19)

(11) EP 0 562 942 B1

(12) **FASCICULE DE BREVET EUROPEEN**

(45) Date de publication et mention
de la délivrance du brevet:
**18.06.1997 Bulletin 1997/25**

(51) Int Cl.6: **G11B 5/39**, G11B 5/49,
G11B 15/12

(21) Numéro de dépôt: **93400735.2**

(22) Date de dépôt: **22.03.1993**

(54) **Dispositif de lecture d'un ensemble d'éléments résistifs**

Vorrichtung zum Lesen einer Anordnung von Widerstandselementen

Device for reading an array of resistive elements

(84) Etats contractants désignés:
**DE GB IT NL**

(30) Priorité: **27.03.1992 FR 9203717**

(43) Date de publication de la demande:
**29.09.1993 Bulletin 1993/39**

(73) Titulaire: **THOMSON-CSF**
**75008 Paris (FR)**

(72) Inventeurs:
- **Colineau, Joseph, THOMSON-CSF**
  **F-92402 Courbevoie Cedex (FR)**
- **Valet, Thierry, THOMSON-CSF**
  **F-92402 Courbevoie Cedex (FR)**

(74) Mandataire: **Guérin, Michel et al**
**THOMSON-CSF-S.C.P.I.,**
**13, Avenue du Président**
**Salvador Allende**
**94117 Arcueil Cédex (FR)**

(56) Documents cités:
**EP-A- 0 467 736**        **FR-A- 2 286 461**

- **PATENT ABSTRACTS OF JAPAN vol. 11, no. 298
  (P-620)26 Septembre 1987 & JP-A-62 089 204**
- **IBM TECHNICAL DISCLOSURE BULLETIN. vol.
  17, no. 12, Mai 1975, ARMONK,NY, US pages
  3778 - 3779 E.G. LEAN & M. LEVANONI
  'SCANNING TAPPED MAGNETORESISTIVE
  SENSOR'**

**Description**

L'invention concerne un dispositif de lecture d'un ensemble d'éléments résistifs, notamment d'éléments magnétorésistifs et plus particulièrement de têtes magnétorésistives arrangées sous forme matricielle.

L'invention est applicable notamment à l'enregistrement sur bandes magnétiques pour périphériques informatiques et a pour objet la sélection et la lecture des éléments d'une tête magnétorésistive multipiste à structure matricielle. Ce dispositif permet la lecture, à l'aide d'une tête statique, de plusieurs pistes d'informations en parallèle.

Des têtes de lecture magnétorésistives à structure matricielle, et leur procédé de sélection et de lecture ont été décrites, notamment dans les Demandes de Brevets FR-A-2 656 454 et FR-A-2 665 010.

Ces procédés consistent à associer un préamplificateur à chacune des lignes de têtes, et à valider à un instant donné un élément et un seul de chacune de ces lignes par un procédé de sélection appliqué à la colonne précédente.

Dans la Demande de Brevet FR-A-2 656 454, on utilise une non-linéarité (saturation des pôles, ou angle de la magnétisation dans l'élément magnétorésistif).

Dans la Demande de Brevet FR-A-2 665 010, on applique une tension sur la colonne à sélectionner, et on fait en sorte que le courant ne puisse circuler que dans l'élément actif de chaque ligne, ce qui conduit à utiliser un amplificateur à faible impédance d'entrée, tel qu'un amplificateur de transconductance.

Lorsque la résistance des éléments MR est faible (de l'ordre de 10 ohms ou moins), comme c'est généralement le cas avec les matériaux et technologies connus actuellement, le terme de bruit prépondérant est la tension de bruit de l'amplificateur.

La présente invention consiste en un procédé mieux adapté à la lecture d'une matrice de capteurs magnétorésistifs, en particulier lorsque leur impédance est faible.

L'invention concerne donc un dispositif de lecture d'un ensemble d'éléments résistifs comportant chacun un accès d'interrogation et un accès de lecture, ce dispositif de lecture comportant un circuit d'interrogation connectable aux accès d'interrogation et un circuit de détection de tension connectable aux accès de lecture et permettant de mesurer la résistance de chaque élément résistif, caractérisé en ce que :

- le circuit d'interrogation applique successivement un potentiel d'interrogation à l'accès d'interrogation de chaque élément résistif tandis qu'il applique un potentiel de référence aux autres éléments résistifs ;
- et ce qu'il comporte au moins un circuit de stabilisation de tension connecté aux accès de lecture des éléments résistifs et qui maintient ces accès sensiblement au potentiel de référence.

Les différents objets et caractéristiques de l'invention apparaîtront plus clairement dans la description qui va suivre faite à titre d'exemple et dans les figures qui représentent :

- la figure 1, un exemple de réalisation du dispositif selon l'invention ;
- la figure 2, un exemple de réalisation plus détaillé du dispositif Selon l'invention ;
- la figure 3, une variante de réalisation du dispositif de la figure 2.

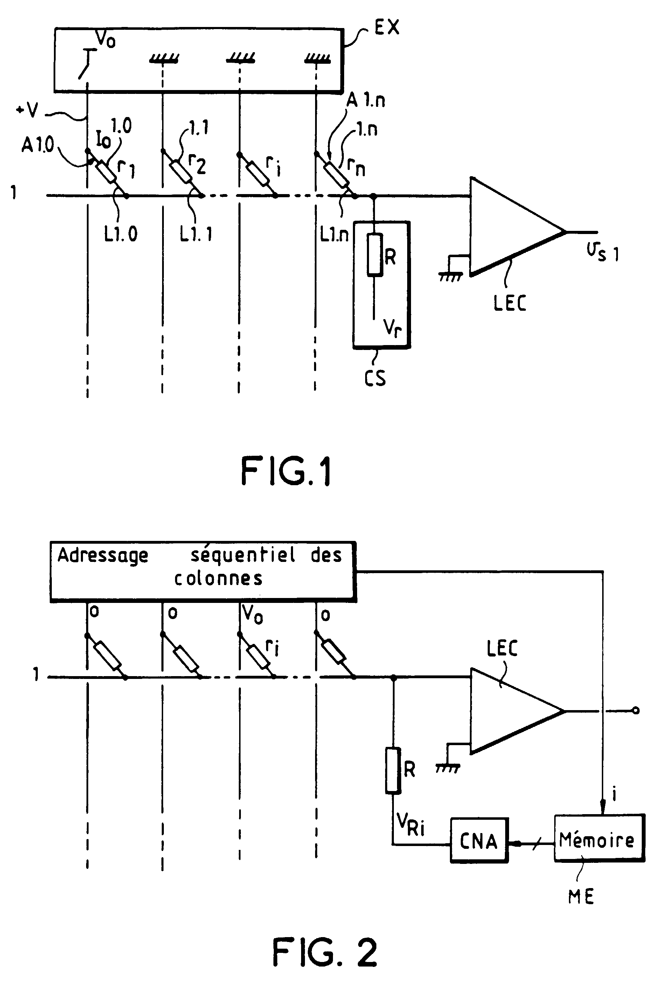

En se reportant à la figure 1, on va tout d'abord décrire un exemple de réalisation de base du dispositif de l'invention.

Ce dispositif comporte un ensemble d'éléments résistifs 1.0, 1.1, ... 1.n pouvant présenter des valeurs de résistances différentes.

Chaque élément 1.0 à 1.n comporte un accès d'interrogation tel que A1.0 et un accès de lecture $L_1.0$.

Un circuit d'exploration EX permet d'appliquer successivement à chaque accès d'interrogation (A1.0 à A1.n) un potentiel d'interrogation $V_0$ tandis qu'il applique aux autres accès d'interrogation un potentiel v (par exemple v = 0 volt). Selon l'exemple de la figure 1, à un instant donné, le circuit EX applique le potentiel $V_0$ à l'accès d'interrogation A1.0 de l'élément 1.0 tandis qu'il applique un potentiel v = 0 Volt aux autres accès d'interrogation.

Les accès de lecture L1.0 à L1.n sont connectés à un détecteur de tension A1.

Selon l'invention lors de l'interrogation d'un élément 1.0 par exemple, pour rendre inefficace l'influence des autres éléments (1.1 à 1.n selon cet exemple), les différents accès de lecture L1.0 à L1.n sont connectés à une source de tension CS par une résistance R de telle façon que les accès de lecture L1.0 à L1.n soient au potentiel v (v = 0 par exemple).

Ainsi, un courant Io circule dans l'élément (1.0). En revanche, l'on cherche à ce qu'il n'y ait pas de courant dans les autres éléments, afin qu'ils ne puissent générer de signal parasite qui s'ajouterait à celui de la tête sélectionnée. Il suffit pour cela d'assurer une tension nulle à leurs bornes. Le potentiel de la ligne est ramené au potentiel v grâce à une résistance R, connectée à un générateur de tension Vr (Vr < 0). La condition précédente est obtenue, avec v = 0 Volt, lorsque :

$$Vo/r = Vr/R$$

r étant la valeur moyenne d'un élément résistif 1.0 à 1.n

L'invention est plus particulièrement applicable à la lecture de têtes magnétorésistives dont la résistance varie avec leur état de magnétisation.

Selon une réalisation préférée les éléments résistifs (magnétorésistifs) sont arrangés sous forme d'une matrice comportant m lignes et chaque ligne comportant n éléments. Un préamplificateur (détecteur) A1 est prévu pour chaque ligne, ou bien on prévoit un préamplificateur (détecteur) A1 commun commutable sur les différentes lignes.

L'analyse de fonctionnement du dispositif de la figure 1 fait ressortir que le signal de lecture apparaît comme une petite variation de résistance $\Delta r$ de la magnétorésistance r. Ceci se traduit par un léger déséquilibre de tension. Le préamplificateur A1 amplifie ce signal.

Avec les notations suivantes :

$\Delta r/r =$ variation de la magnétorésistance à saturation

$\eta =$ efficacité du couplage magnétique (ou rapport entre l'amplitude du signal relu et l'amplitude à saturation)

$n =$ nombre d'éléments par ligne.

Le signal d'entrée du préamplificateur A1

$$ve \approx -\frac{V}{n+1}\eta\frac{\Delta r}{r}$$

Le signal en sortie du préamplificateur A1 est évidemment:

$$vs = A\, ve$$

Le gain A du préamplificateur peut être très élevé : la composante continue a été supprimée et le signal peut utiliser une bonne partie de la dynamique de l'ampli.

En ce qui concerne la bande passante du préamplificateur A1, si D est le débit binaire de la tête de lecture, s le facteur de suréchantillonnage (nombre d'échantillons de signal par bit relu) et m x n le nombre total d'éléments 1.0 à 1.n, alors la fréquence des échantillons par préampli de lecture est :

$$\frac{D\times S}{m}$$

La bande passante de l'amplificateur de lecture doit être supérieure à la cadence de lecture des colonnes successives, de manière à ne pas introduire de diaphonie par mélange d'échantillons successifs. L'on choisira une bande passante de l'ordre de 5 fois cette valeur:

$$B=5\times\frac{D\times S}{m}$$

En ce qui concerne le niveau de bruit, si vb est la tension de bruit (en

$$V/\sqrt{Hz}$$

à l'entrée du préampli, alors la tension efficace de bruit générée par l'ampli est donnée par :

$$vb_{eff} = vb\times\sqrt{B}$$

Si l'on suppose que c'est le terme de bruit prépondérant, le rapport S/B s'exprime par :

$$\frac{S}{B} = 20\log\left[ \frac{V}{n+1}\eta\frac{\Delta r}{r} \times (vb^2 \times 5D.S/m) - 1/2 \right]$$

La nature du système est telle qu'il n'est pas possible de garantir de manière rigoureuse la stabilité de la valeur de r. Il n'est pas non plus possible de garantir que r sera identique pour tous les éléments MR. Dans le cas d'une variation $\Delta r/r$ de l'un des éléments, la tension moyenne apparaissant à l'entrée de l'amplificateur, et donc aux bornes des éléments non sélectionnés, est de :

$$v\frac{\Delta r}{r}\frac{1}{n+1}$$

et la diaphonie qui peut résulter de cet état de fait est donnée par

$$\frac{\Delta r}{r}\frac{1}{n+1}$$

Si l'on garantit une dispersion des éléments en deçà de 10 %, la diaphonie sera de l'ordre de -40 dB (pour $n \geq 10$).

Si la dispersion est plus grande, ou si des variations en température apparaissent, alors il est possible de faire varier $V_r$ de manière individuelle pour chaque interrogation d'un élément.

La figure 2 représente un circuit permettant de générer n valeurs différentes pour $V_r$, chacune correspondant à l'interrogation d'un élément particulier. Ces tensions Vri, représentées par des nombres binaires, sont stockées dans une mémoire ME, et présentées l'une après l'autre, à l'instant convenable, à l'entrée d'un convertisseur numérique-analogique CNA qui les traduit en tensions électriques.

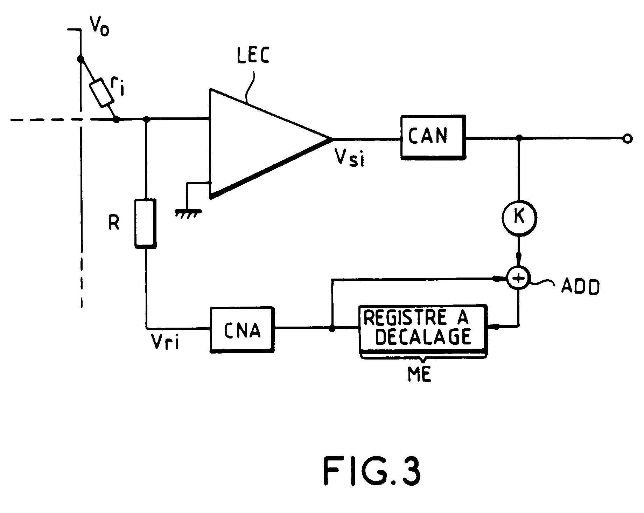

De manière à assurer que les tensions moyennes en sortie seront toujours bien compensées, même si des dérives se produisent l'on insère le circuit précédent dans une boucle de contre-réaction qui permet de modifier la valeur de la tension de compensation en fonction du résidu de tension moyenne en sortie du circuit de détection A1. Cette boucle peut être du type représenté en figure 3. Le circuit est ici constitué du circuit de détection AI (amplificateur de lecture), d'un convertisseur analogique-numérique CAN, d'un multiplieur K par un coefficient K (k < 0), d'un registre à décalage ME à n étages, rebouclé par un additionneur ADD, et enfin d'un convertisseur numérique-analogique CNA.

Par suite du fonctionnement multiplexé de la tête, le convertisseur CAN reçoit successivement les tensions Vs1, Vs2... Vsi... Vsn correspondant aux signaux délivrés par les n interrogations d'une ligne. Si l'on s'intéresse uniquement à l'élément i, l'on peut décrire le fonctionnement du circuit par les équations suivantes :

$$Vs_{k+1} = Ve_{k+1} + Vr_{k+1} \qquad \text{(l'ampli est supposé de gain unité)}$$

$$Vr_{k+1} = KV_{sk} + V_{rk} \qquad \text{(équation d'actualisation de vrk)}$$

où Ve est la tension délivrée par la tête i en l'absence de compensation

Vs    est la tension à l'entrée du CAN

et

Vr    est la tension de compensation délivrée par le CNA

et les indices K, K+1... des instants successifs d'échantillonnage.

La réponse du circuit s'exprime par l'équation en z suivante :

$$\frac{Vs}{Vs} = \frac{1-z^{-1}}{1-(1+K)z^{-1}}$$

Si K est négatif, le circuit se comporte comme un filtre passe-haut du premier ordre. Toute composante continue présente à l'entrée est donc supprimée.

La fréquence de coupure du filtre dépend de K. Elle sera choisie suffisamment basse pour supprimer la composante continue et ses variations lentes sans atténuer les composantes basse fréquence du signal de lecture.

En réalité, ce traitement s'applique séquentiellement aux signaux des n éléments d'une ligne : le registre à décalage a pour rôle de délivrer la tension de compensation Vri à l'instant de sélection d'un élément i, puis de stocker la nouvelle valeur de Vri pendant n coups d'horloge, jusqu'à ce qu'on lise à nouveau l'élément i. Les n signaux sont ainsi traités de manière multiplexée dans le temps.

Le circuit présenté ici est un filtre du premier ordre. Il peut être souhaitable, dans certaines applications, de réaliser un système d'un ordre supérieur. Cela ne présente, bien sûr, aucune difficulté si l'on utilise les techniques classiques de synthèse de filtres numériques.

Ce circuit permet donc le fonctionnement multiplexé d'une matrice d'éléments magnétorésistifs avec un niveau de sortie élevé et un bon rapport signal bruit. La composante continue est supprimée, et la diaphonie annulée grâce à un circuit de compensation fonctionnant en multiplexe temporel. Ce circuit est applicable notamment à la lecture d'une tête magnétique comportant une matrice de n x m têtes élémentaires magnétorésistives.

Il est bien évident que la description qui précède n'a été faite qu'à titre d'exemple. Son application notamment à la lecture de têtes magnétorésistives n'a été fournie que pour illustrer la description.

**Revendications**

1. Dispositif de lecture d'un ensemble d'éléments résistifs (1.0, ... 1.n) comportant chacun un accès d'interrogation (A1.0, ... A1.n) et un accès de lecture (L1.0, ... L1.n), ce dispositif de lecture comportant un circuit d'interrogation (Ex) connectable aux accès d'interrogation (A1.0, ... A1n) et un circuit de détection de tension (LEC) connectable aux accès de lecture (L1.0, ... L1.n) et permettant de mesurer la résistance de chaque élément résistif, caractérisé en ce que :

   - le circuit d'interrogation (Ex) applique successivement un potentiel d'interrogation (V) à l'accès d'interrogation de chaque élément résistif tandis qu'il applique un potentiel de référence (v) aux autres éléments résistifs ;
   - et en ce qu'il comporte au moins un circuit de stabilisation (CS) de tension connecté aux accès de lecture (L1.0, L1.n) des éléments résistifs et qui maintient ces accès sensiblement au potentiel de référence (v).

2. Dispositif de lecture selon la revendication 1, caractérisé en ce que les éléments résistifs (1.0, ...1.n) sont des têtes de lecture magnétorésistives.

3. Dispositif de lecture selon la revendication 1, caractérisé en ce que le potentiel de référence (v) est un potentiel de valeur nulle.

4. Dispositif de lecture selon la revendication 2, caractérisé en ce que :

   - les têtes magnétorésistives (1.0, 1.n) sont arrangées sous forme matricielle en lignes et colonnes, les accès d'interrogation des têtes d'une colonne étant connectés à un fil de colonne, les accès de lecture des têtes d'une ligne étant connectés à un fil de ligne ;
   - le circuit d'interrogation (EX) applique successivement le potentiel d'interrogation (V) à chaque fil de colonne tandis qu'il applique le potentiel de référence (v) aux autres fils de colonne ;
   - un circuit de détection de tension (LEC) est connecté à un fil de ligne ;
   - le circuit de stabilisation de tension (CS) est connecté aux différents fils de ligne.

5. Dispositif de lecture selon la revendication 4, caractérisé en ce qu'il comporte autant de circuits de stabilisation de tension qu'il y a de fils de ligne, chaque circuit de stabilisation étant connecté à un fil de ligne.

6. Dispositif de lecture selon la revendication 1, caractérisé en ce que le circuit de stabilisation comporte une source de tension ($V_r$) et une résistance (R).

7. Dispositif de lecture selon la revendication 1, caractérisé en ce qu'il comporte également une mémoire (ME) par interrogation d'un élément (1.0, ... 1.n), enregistrant à chaque interrogation d'une tête la valeur de la tension détectée et commandant, lors de l'interrogation suivante du même élément, le circuit de stabilisation (CS) de façon à ce qu'il applique aux accès de lecture (L1.0,... L1.n) une tension sensiblement égale à celle de la tension précédemment détectée.

8. Dispositif de lecture selon la revendication 5, caractérisé en ce qu'il comporte un circuit de compensation (ADD) permettant à chaque interrogation de modifier la valeur de la tension appliquée aux accès de lecture, par le circuit de stabilisation (CS), en fonction de la tension détectée et d'enregistrer la tension ainsi modifiée.

**Patentansprüche**

1. Vorrichtung zum Auslesen einer Gruppe von Widerstandselementen (1.0, ... 1.n), die je einen Abfragezugang (A1.0, ... A1.n) und einen Lesezugang (L1.0 ... L1n) besitzen, wobei die Lesevorrichtung eine Abfrageschaltung, die an die Abfragezugänge (A1.0 ... A1.n) anschließbar ist, und eine Spannungsdetektorschaltung (LEC) enthält, die an die Lesezugänge (L1.0 ... L1.n) anschließbar ist und die Messung jedes Widerstandselements erlaubt, dadurch gekennzeichnet, daß

   - die Abfrageschaltung (EX) nacheinander ein Abfragepotential (V) an den Abfragezugang jedes Widerstandselements anlegt, während zugleich ein Bezugspotential (v) an alle anderen Widerstandselemente angelegt wird,
   - und mindestens eine Spannungsstabilisierungsschaltung (CS) an die Lesezugänge (L1.0 ... L1.n) der Widerstandselemente angeschlossen ist, die diese Zugänge im wesentlichen auf Bezugspotential (v) hält.

2. Lesevorrichtung nach Anspruch 1, dadurch gekennzeichnet, daß die Widerstandselemente (1.0, ... 1.n) magneto-resistive Leseköpfe sind.

3. Lesevorrichtung nach Anspruch 1, dadurch gekennzeichnet, daß das Bezugspotential (v) ein Potential des Werts Null ist.

4. Lesevorrichtung nach Anspruch 2, dadurch gekennzeichnet, daß

   - die magneto-resistiven Köpfe (1.0, 1.n) in Matrixform in Zeilen und Spalten angeordnet sind, wobei die Abfragezugänge der Köpfe einer Spalte an einen Spaltendraht und die Lesezugänge der Köpfe einer Zeile an einen Zeilendraht angeschlossen sind,
   - die Abfrageschaltung (EX) nacheinander das Abfragepotential (V) an jeden Spaltendraht anlegt, während sie das Bezugspotential (v) zugleich an die anderen Spaltendrähte anlegt,
   - eine Spannungsdetektorschaltung (LEC) an einen Zeilendraht angeschlossen ist,
   - die Spannungsstabilisierungsschaltung (CS) an die verschiedenen Zeilendrähte angeschlossen ist.

5. Lesevorrichtung nach Anspruch 4, dadurch gekennzeichnet, daß sie ebensoviele Spannungsstabilisierungsschaltungen besitzt, wie es Zeilendrähte gibt, wobei jede Spannungsstabilisierungsschaltung an einen Zeilendraht angeschlossen ist.

6. Lesevorrichtung nach Anspruch 1, dadurch gekennzeichnet, daß die Spannungsstabilisierungsschaltung eine Spannungsquelle ($V_r$) und einen Widerstand (R) besitzt.

7. Lesevorrichtung nach Anspruch 1, dadurch gekennzeichnet, daß sie weiter einen Speicher je Abfrageeinheit eines Elements (1.0, ... 1.n) besitzt, der bei jeder Abfrage eines Kopfes den Wert der erfaßten Spannung registriert und bei der nächstfolgenden Abfrage des gleichen Elements die Stabilisierungsschaltung (CS) so steuert, daß diese an die Lesezugänge (L1.0, ... L1.n) eine im wesentlichen gleiche Spannung wie die vorher erfaßte Spannung anlegt.

8. Lesevorrichtung nach Anspruch 5, dadurch gekennzeichnet, daß sie eine Kompensationsschaltung (ADD) aufweist, die bei jeder Abfrage den Wert der durch die Stabilisierungsschaltung (CS) an die Lesezugänge angelegten Spannung abhängig von der erfaßten Spannung verändern und die so veränderte Spannung registrieren kann.

**Claims**

1. Device for reading a set of resistive elements (1.0, ... 1.n) each comprising an interrogation port (A1.0, ... A1.n) and a reading port (L1.0 ... L1.n), this reading device comprising an interrogation circuit (Ex) connectable to the interrogation ports (A1.0 ... A1.n) and a voltage detection circuit (LEC) connectable to the reading ports (L1.0, ... L1.n) and making it possible to measure the resistance of each resistive element, characterized in that:

- the interrogation circuit (Ex) successively applies an interrogation potential (V) to the interrogation port of each resistive element while it applies a reference potential (v) to the other resistive elements;
- and in that it comprises at least one voltage stabilization circuit (CS) connected to the reading ports (L1.0, L1.n) of the resistive elements and which keeps these ports substantially at the reference potential (v).

2. Reading device according to Claim 1, characterized in that the resistive elements (1.0, ... 1.n) are magnetoresistive reading heads.

3. Reading device according to Claim 1, characterized in that the reference potential (v) is a potential of zero value.

4. Reading device according to Claim 2, characterized in that:

- the magnetoresistive heads (1.0, 1.n) are arranged in matrix form in rows and columns, the interrogation ports of the heads of a column being connected to a column wire, the reading ports of the heads of a row being connected to a row wire;
- the interrogation circuit (EX) successively applies the interrogation potential (V) to each column wire while it applies the reference potential (v) to the other column wires;
- a voltage detection circuit (LEC) is connected to a row wire;
- the voltage stabilization circuit (CS) is connected to the various row wires.

5. Reading device according to Claim 4, characterized in that it comprises as many voltage stabilization circuits as there are row wires, each stabilization circuit being connected to a row wire.

6. Reading device according to Claim 1, characterized in that the stabilization circuit comprises a voltage source ($V_r$) and a resistor (R).

7. Reading device according to Claim 1, characterized in that it also comprises a memory (ME) by interrogation of an element (1.0, ... 1.n), which records the value of the voltage detected at each interrogation of a head and which controls, during the next interrogation of the same element, the stabilization circuit (CS) in such a way that it applies, to the reading ports (L1.0, ... L1.n), a voltage substantially equal to that of the voltage previously detected.

8. Reading device according to Claim 5, characterized in that it comprises a compensation circuit (ADD) making it possible, at each interrogation, to modify the value of the voltage applied to the reading ports, by the stabilization circuit (CS), as a function of the voltage detected and to record the voltage thus modified.

FIG.1

FIG. 2

8

FIG.3